# EUROPEAN PATENT SPECIFICATION

(11) **EP 3 406 321 B1**
(45) Date of publication and mention of the grant of the patent: **24.04.2019**
(21) Application number: 17177645.3
(22) Date of filing: 23.06.2017
(51) Int. Cl.: B01D 53/78, B01D 53/50

(54) **AMMONIA-BASED DESULFURIZATION PROCESS AND APPARATUS THROUGH AMMONIA-ADDING IN DIFFERENT CHAMBERS**
VERFAHREN UND VORRICHTUNG ZUR AMMONIAKBASIERTEN ENTSCHWEFELUNG DURCH AMMONIAKZUGABE IN VERSCHIEDENEN KAMMERN
PROCÉDÉ DE DÉSULFURATION À BASE D'AMMONIAQUE ET APPAREIL D'AJOUT D'AMMONIAQUE DANS DIFFÉRENTES CHAMBRES

(30) Priority: 25.05.2017 CN 201710379460
(43) Date of publication of application: 28.11.2018
(73) Proprietor: Jiangnan Environmental Protection Group Inc., Grand Cayman (KY)
(72) Inventor: LOU, Jing, NANJING, Jiangsu 211100 (CN); XU, Changxiang, NANJING, Jiangsu 211100 (CN); XU, Xiangjun, NANJING, Jiangsu 211100 (CN); LUO, Yongying, NANJING, Jiangsu 211100 (CN)
(74) Representative: Croce, Valeria

(56) References cited:
- CN-A- 101 601 964
- CN-A- 105 126 589
- CN-A- 105 195 002
- CN-A- 105 727 699
- CN-A- 106 621 768

## Description

### Technical Field

The present invention relates to an ammonia-based desulfurization process through ammonia-adding in different chambers and an apparatus thereof. More particularly, the present invention relates to an ammonia-based desulfurization process through ammonia-adding in different chambers and an apparatus thereof, wherein an oxidation section comprises at least one oxidation chamber and at least one ammonia-mixing chamber, and an ammonia absorbent is added to the ammonia-mixing chamber.

### Background Art

At present, limestone desulfurization process and ammonia-based desulfurization process are mainstream processes worldwide for removing sulfur dioxide from gases. In the limestone desulfurization process, large quantities of waste water and gypsum slags are produced during desulfurization, and a lot of investment and operating costs are required to treat these waste water and waste slags. Also, in the limestone desulfurization process, while 1 ton of sulfur dioxide is removed, about 0.7 ton of carbon dioxide is produced synchronously. With the ammonia-based desulfurization process, basically no waste water or waste slags are produced, and the ammonia desulfurizer that is fed is converted into a useful ammonium sulfate fertilizer, thus it is more environmentally friendly.

Chinese patents CN 1283346C and CN 1321723C disclose a process for removing SO₂ from coal-fired flue gas by using ammonia as a removal agent, so that the SO₂ concentration in the clean gas is less than 100 mg/Nm³. However, the amount of ammonia slip in the clean gas can be up to 12 mg/Nm³. In the patents, no attention is paid to the formation of aerosols.

Chinese Patent CN 100428979C discloses an ammonia-based desulfurization process and an apparatus thereof by crystallization inside a tower, wherein the desulfurization tower is designed to be of a multi-section structure, successively including an oxidation section, a crystallization section, a cooling absorption section, a main absorption section, and a dehydration-demisting section from bottom to top. In the process, the evaporating ability of flue gas is utilized for crystallization to reduce operation energy consumption, the SO₂ concentration in the clean gas is less than 200 mg/Nm³, and the ammonia content in the clean gas can be as low as 3 mg/Nm³.

Chinese Patent CN 103301705B discloses an apparatus and a process for controlling fine particulate matters in desulfurized flue gas, wherein an absorption liquid demister for removing most of the droplets larger than 10 µm and a flue gas demister for removing fine particulate matters by rewashing and water scrubbing are provided after an absorption section, thereby achieving no less than 60% removal rate of fine particulate matters.

Chinese Patent CN105727699A discloses a desulfurization tower and an oxidation circulation tank arranged outside the desulfurization tower. Ammonia is added to the primary and secondary absorption-circulation chambers located at the lower part and in communication with the oxidation chamber.

However, there is still a need for an ammonia-based desulfurization process through ammonia-adding in different chambers and an apparatus thereof capable of further inhibiting ammonia slip and aerosol formation.

### Summary of the Invention

In order to address the problems of ammonia slip and aerosol formation suffered by the prior art ammonia-based desulfurization processes, the present inventors have conducted diligently researches. The results show that, by adopting the technical means of controlling solutions in different zones of an ammonia-based desulfurization apparatus to have different compositions through ammonia-adding in different chambers and ammonia-adding in different sections, efficient desulfurization as well as control of ammonia slip and aerosol formation can be achieved. The present invention is thus completed.

Therefore, in one aspect, the present invention relates to an ammonia-based desulfurization process through ammonia-adding in different chambers, wherein an oxidation section comprises an oxidation chamber and an ammonia-mixing chamber in fluid communication with each other, and an ammonia absorbent is added to the ammonia-mixing chamber.

The absorption-oxidation cycle of the ammonia-based desulfurization process comprises liquid circulation between the oxidation chamber and a secondary spray absorption section and liquid circulation between the ammonia-mixing chamber and a primary spray absorption section, and there is a communication between the two circulations at least through the fluid communication between the oxidation chamber and the ammonia-mixing chamber, and wherein the primary spray absorption section is located upstream of the secondary spray absorption section, relative to the flow of a gas stream to be treated.

In another aspect, the present invention relates to an ammonia-based desulfurization apparatus, comprising:a primary spray absorption section, configured to allow countercurrent contact between a
first spray liquid sprayed from the upper part thereof and a gas stream entering from the lower part thereof, allow to take out the contacted first spray liquid from the lower part thereof to provide a reflux liquid, and allow the preliminarily absorbed gas stream to enter a secondary spray absorption section, for example, through a partition with a gas cap;
the secondary spray absorption section, configured to allow countercurrent contact between a second spray liquid sprayed from the upper part thereof and the gas stream entering from the primary spray absorption section, and allow to take out the contacted spray liquid from the lower part thereof to provide a reflux liquid; and
an oxidation section, comprising:
an oxidation chamber, configured to allow contact and reaction between at least part of the reflux liquid from the secondary spray absorption section or part of the combined reflux liquid from the primary and secondary spray absorption sections and an oxygen-containing gas, and allow to take out at least part of the liquid phase from the lower part thereof for circulation to the secondary spray absorption section or both the secondary and primary spray absorption sections; and
an ammonia-mixing chamber, configured to be in fluid communication with the oxidation chamber on the top and/or side thereof, allow at least part of the reflux liquid from the primary spray absorption section or part of the combined reflux liquid from the primary and secondary spray absorption sections to enter from the upper part thereof and mix with an ammonia absorbent, and allow to take out a liquid stream from the lower part thereof for circulation to the primary spray absorption section or both the secondary and primary spray absorption sections.

In an embodiment, the apparatus further comprises a cooling-and-concentrating section in the upstream of the primary spray absorption section, wherein the cooling-and-concentrating section is configured to allow a gas stream to be treated, e.g. a flue gas produced in coal-fired boilers, to be washed and cooled by a circulating washing liquid in the cooling-and-concentrating section whilst concentrating the circulating washing liquid in the cooling-and-concentrating section using the heat in the gas stream, and allow the cooled gas stream to enter the primary spray absorption section, for example, through a partition with a gas cap.

### Brief Description of the Drawings

Drawings are provided to assist in understanding of the present invention. However, the drawings are not intended to limit the present invention in a manner inconsistent with the claims. In the drawings,Figure 1 is a schematic diagram of a process in accordance with an embodiment of the present invention. Figure 2 is a schematic flow diagram of an absorption cycle in accordance with an embodiment of the present invention. Figure 3 is a schematic diagram of openings of an ammonia-mixing chamber in accordance with an embodiment of the present invention.

In the drawings, like reference numerals refer to like streams or units, wherein: 1 means an absorption tower, 2 means an oxidation chamber, 3 means a cooling-and-concentrating section, 4 means an aqueous ammonia, 5 means liquid ammonia, 6 means an ammonia-mixing chamber, 7 means air, 8 means a primary spray absorption section, 9 means a secondary spray absorption section, 10 means a gas cap, 11 means a primary spray absorption circulating pump, and 12 means a secondary spray absorption circulating pump.

### Description of the Preferred Embodiments

In one aspect, the present invention provides an ammonia-based desulfurization process through ammonia-adding in different chambers, wherein an oxidation section comprises an oxidation chamber and an ammonia-mixing chamber in fluid communication with each other, and an ammonia absorbent is added to the ammonia-mixing chamber.

The absorption-oxidation cycle of the ammonia-based desulfurization process comprises liquid circulation between the oxidation chamber and a secondary spray absorption section and liquid circulation between the ammonia-mixing chamber and a primary spray absorption section, and there is a communication between the two circulations at least through the fluid communication between the oxidation chamber and the ammonia-mixing chamber, and wherein the primary spray absorption section is located upstream of the secondary spray absorption section, relative to the flow of a gas stream to be treated.

In some embodiments, the ammonia-based desulfurization process comprises providing a sulfur dioxide-containing gas stream to be treated;feeding the sulfur dioxide-containing gas stream to be treated into a cooling-and
-concentrating section, where the gas stream is washed and cooled using a circulating washing liquid in the cooling-and-concentrating section whilst concentrating the circulating washing liquid in the cooling-and-concentrating section using the heat in the gas stream;
allowing the gas stream from the cooling-and-concentrating section to enter the primary spray absorption section, where the gas stream is in countercurrent contact with a first spray absorption liquid;
allowing the gas stream from the primary spray absorption section to enter the secondary spray absorption section, where the gas stream is in countercurrent contact with a second spray absorption liquid;
feeding the liquid stream from the bottom of the primary spray absorption section and the liquid stream from the bottom of the secondary spray absorption section as a reflux liquid respectively into the ammonia-mixing chamber and the oxidation chamber, or combining the two streams and then separately feeding the combined liquid stream into the ammonia-mixing chamber and the oxidation chamber, feeding an oxygen-containing gas into the oxidation chamber, and feeding an ammonia absorbent into the ammonia-mixing chamber, which is in fluid communication with the oxidation chamber;
feeding at least part of the liquid stream taken out from the lower part of the oxidation chamber as the second spray absorption liquid into the secondary spray absorption section, and optionally, feeding at least part of the liquid stream taken out from the lower part of the oxidation chamber into a subsequent unit to recover ammonium sulfate;
feeding the liquid stream taken out from the lower part of the ammonia-mixing chamber as the first spray absorption liquid into the primary spray absorption section; and
venting the gas stream from the upper part of the secondary spray absorption section after removing the droplets, optionally after further removal of fine particulate matters.

In the process of the present invention, the sulfur dioxide-containing gas to be treated may be any sulfur dioxide-containing gas produced in any industrial production process. Examples of the sulfur dioxide-containing gas to be treated include, but are not limited to, flue gas produced by coal combustion and flue gas produced in a fluidized-bed catalytic cracking process.

In the process of the present invention, ammonia is used as an absorbent to remove sulfur oxides in the gas stream. The ammonia may be in the form of liquid ammonia, gaseous ammonia, aqueous ammonia or a combination thereof.

In the process of the present invention, the oxygen-containing gas may be, for example, oxygen, air, oxygen-enriched air, oxygen-poor air, or the like.

A key feature of the process of the present invention is that, in the oxidation section, the oxidation chamber and the ammonia-mixing chamber in fluid communication with each other are separately provided, and usually the ammonia absorbent is only introduced into the ammonia-mixing chamber. In this way, the oxidation rates and the pH of the materials in the oxidation chamber and the ammonia-mixing chamber can be controlled separately.

In the process of the present invention, the addition method of the ammonia absorbent is not particularly limited. In an embodiment, the ammonia absorbent is added directly to a liquid stream using a tubular distributor, a microporous distributor, a static mixer, or the like. In another embodiment, the ammonia absorbent is first mixed with a gas stream, e.g. air, and then the mixed gas stream is added directly to, for example, the ammonia-mixing chamber, or added to a liquid stream, for example, the liquid stream to the ammonia-mixing chamber, using a tubular distributor, a microporous distributor, a static mixer, or the like. In the case where the ammonia absorbent such as liquid ammonia is mixed with the gas stream, the amount of the gas stream is not particularly limited, but the amount can be preferably such that the volume ratio of the gaseous ammonia after liquid ammonia gasification to the gas stream is 1: 0.03-1: 0.2, preferably 1: 0: 03-1: 0.1.

In the process of the present invention, there are two absorption-oxidation cycles, one is the liquid stream circulation between the secondary spray absorption section and the oxidation chamber, and the other is the liquid stream circulation between the primary spray absorption section and the ammonia-mixing chamber, and there is a communication between the two circulations at least through fluid communication between the oxidation chamber and the ammonia-mixing chamber. In addition, the pipelines transporting circulating spray absorption liquids from the oxidation chamber and the ammonia-mixing chamber can be independent of each other, but a communication pipeline controlled by a valve between the two is preferably arranged to allow adjustment of the amounts and/or pH of the liquids entering the primary spray absorption section and the secondary spray absorption section. In addition, the reflux liquid from the primary spray absorption section and the reflux liquid from the secondary spray absorption section can be fed to the ammonia-mixing chamber and the oxidation chamber respectively, or can be combined, then part of the combined reflux liquid is fed to the ammonia-mixing chamber, and the other part is fed to the oxidation chamber. Based on the total amount of the reflux liquids from the primary spray absorption section and the secondary spray absorption section, 30 vol%-85 vol%, e.g. about 60 vol%-about 70 vol%, for example about 60 vol%, of the reflux liquid enters the ammonia-mixing chamber, and the remaining reflux liquid enters the oxidation chamber.

In a specific embodiment, the spray liquid from the bottom of the primary spray absorption section and the spray liquid from the bottom of the secondary spray absorption section are combined and refluxed, wherein about 60 vol%-about 70 vol%, e.g. 65 vol%, of the combined reflux liquid enters the ammonia-mixing chamber, where the reflux liquid is combined with the ammonia absorbent to adjust the pH value, and the remaining part of the combined reflux liquid enters the oxidation chamber.

In some specific embodiments, liquid ammonia is used as the ammonia absorbent, wherein part of the liquid ammonia (e.g. about 55 mol% based on the total ammonia added to the ammonia-mixing chamber) uniformly enters the reflux liquid part in the ammonia-mixing chamber through a microporous distributor or other types of distributors, while the other part (e.g. about 45 mol% based on the total ammonia added to the ammonia-mixing chamber) is mixed with an oxygen-containing gas, e.g. air, and then added to the ammonia-mixing chamber. The volume of the oxygen-containing gas, e.g. air, is about 3%-about 10%, e.g. about 5%, of the volume of gaseous ammonia after liquid ammonia gasification.

Mainly by regulating the amount of the ammonia absorbent introduced into the ammonia-mixing chamber and regulating the relative amount of the two adsorption-oxidation cycles, it is possible to control the pH of the circulating liquids at the outlet of the ammonia-mixing chamber and at the outlet of the oxidation chamber and respective oxidation rates in the oxidation chamber and the ammonia-mixing chamber. In some embodiments, the pH of the circulating liquid at the outlet of the ammonia-mixing chamber is in a range of 4.6-8.0, preferably 5.6-6.4, the oxidation rate in the ammonia-mixing chamber is in a range of 93%-99.5%, preferably 97.5%-99%, the pH of the circulating liquid at the outlet of the oxidation chamber is in a range of 4.0-6.8, preferably 4.5-5.9, and the oxidation rate in the oxidation chamber is not less than 98.5%, preferably 98.5%-99.5%. The term "oxidation rate", as used herein, refers to the conversion rate of ammonium sulfite (ammonium bisulfite) in the reflux liquid entering the oxidation chamber and the ammonia-mixing chamber being oxidized to ammonium sulfate.

Optionally, in the process of the present invention, an ammonia absorbent is also added in at least one of the oxidation chamber, the cooling-and-concentrating section (the pH is controlled in a range of 2.5-5.5, preferably in a range of 3-3.5), the primary spray absorption section and the secondary spray absorption section to control the pH of the material in each section.

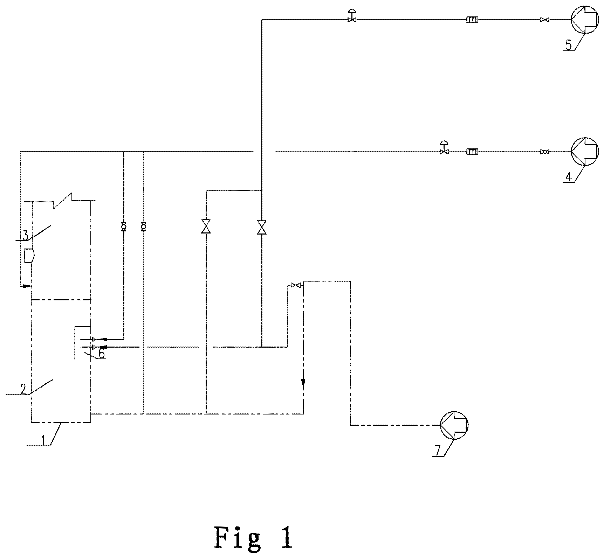

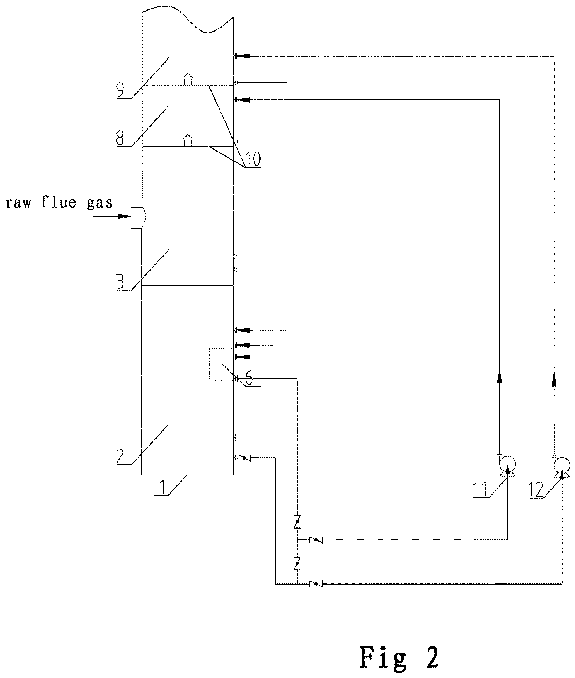

Referring to Figures 1 and 2, one embodiment of the process of the present invention is described. The gas stream to be treated, e.g. flue gas produced in coal-fired boilers, enters a cooling-and-concentrating section 3, where the gas stream is washed and cooled using a circulating washing liquid in the cooling-and-concentrating section whilst concentrating the circulating washing liquid in the cooling-and-concentrating section using the heat in the flue gas. As shown in Figure 1, an ammonia absorbent 4 (e.g. aqueous ammonia) is also introduced into the gas stream in the cooling-and-concentrating section 3, although this is not necessary. The cooled gas stream enters (e.g. through a gas cap) a primary spray absorption section 8 upward, where the gas stream is in countercurrent contact with a first spray liquid entering through a sprayer from the upper part of the primary spray absorption section 8 so that at least part of the sulfur oxides in the gas stream is absorbed into the spray liquid and the sulfur oxides content in the gas stream is reduced accordingly. The contacted first spray liquid is collected at the bottom of the primary spray absorption section 8, and is taken out as the reflux liquid entering an oxidation chamber 2 and an ammonia-mixing chamber 6. The gas stream primarily absorbed in the primary spray absorption section 8 enters (e.g. through a gas cap) a secondary spray absorption section 9 upward, where the gas stream is in countercurrent contact with a second spray liquid entering through a sprayer from the upper part of the secondary spray absorption section 9 so that the sulfur oxides content in the gas stream is further reduced and possibly the amount of entrained ammonia is reduced. The contacted second spray liquid is collected at the bottom of the secondary spray absorption section 9, and is taken out as the reflux liquid entering the oxidation chamber 2 and the ammonia-mixing chamber 6. The gas stream further treated in the secondary spray absorption section 9 may be vented after removing droplets, or vented after further treatment through a subsequent optional section of removing fine particulate matters. The reflux liquid from the secondary spray absorption section 9 or part of the combined reflux liquid from the primary spray absorption section 8 and the secondary spray absorption section 9 (as shown in Figure 1) enters the oxidation chamber 2, and is mixed with an oxygen-containing gas 7, e.g. air, therein so that at least part of ammonium sulfite (ammonium bisulfite) in the reflux liquid is oxidized to ammonium sulfate. Part of the liquid phase in the lower part of the oxidation chamber 2 is taken out through a pipeline 13, at least part of the liquid stream taken out is fed to the upper part of the secondary spray absorption section 9 via a circulating pump 12 as the spray absorption liquid, and optionally, at least part of the liquid stream taken out is fed to a downstream unit for treatment to recover ammonium sulfate. An ammonia-mixing chamber 6 is further provided, and is in fluid communication with the oxidation chamber 2 through openings on the top and side thereof, allowing material exchange between the two chambers. At least part of the reflux liquid from the bottom of the primary spray absorption section 8 or at least part of the combined reflux liquid from the bottom of the primary spray absorption section 8 and the bottom of the secondary spray absorption section 9 enters the ammonia-mixing chamber 6 at its upper part, and is combined with an ammonia absorbent 5 (e.g. liquid ammonia) (e.g. via a microporous distributor). Additional ammonia absorbent 5 (e.g. liquid ammonia) is mixed with air 7 and is then added to the ammonia-mixing chamber 6. Part of the liquid is taken out from the lower part of the ammonia-mixing chamber 6 through a pipeline 14, and is fed to the upper part of the primary spray absorption section 8 through a circulating pump 11 as the spray absorption liquid. A communication channel may be provided between the pipelines 13 and 14, thereby allowing adjustment of the amounts and pH values of the spray liquids entering the primary spray absorption section 8 and the secondary spray absorption section 9. In the process, an ammonia absorbent is introduced into not only the ammonia-mixing chamber 6 and the cooling-and-concentrating section 3, but also optionally one or more of the primary spray absorption section 8, the secondary spray absorption section 9, and optionally the section of removing fine particulate matters, to regulate and control the composition and pH of the stream in each section (not shown).

In another aspect, the present invention provides an ammonia-based desulfurization apparatus suitable for carrying out the above process of the present invention, comprising:
a primary spray absorption section, configured to allow countercurrent contact between a first spray liquid sprayed from the upper part thereof and a gas stream entering from the lower part thereof, allow to take out the contacted first spray liquid from the lower part thereof to provide a reflux liquid, and allow the preliminarily absorbed gas stream to enter a secondary spray absorption section, for example, through a partition with a gas cap;
a secondary spray absorption section, configured to allow countercurrent contact between a second spray liquid sprayed from the upper part thereof and the gas stream entering from the primary spray absorption section, and allow to take out the contacted second spray liquid from the lower part thereof to provide a reflux liquid; and
an oxidation section, comprising:
   an oxidation chamber, configured to allow contact and reaction between at least part of the reflux liquid from the secondary spray absorption section or part of the combined reflux liquid from the primary and secondary spray absorption sections and an oxygen-containing gas, and allow to take out at least part of the liquid phase from the lower part thereof for circulation to the secondary spray absorption section or both the secondary and primary spray absorption sections; and an ammonia-mixing chamber, configured to be in fluid communication with the oxidation chamber through openings on the top and/or side thereof, allow at least part of the reflux liquid from the primary spray absorption section or part of the combined reflux liquid from the primary and secondary spray absorption sections to enter from the upper part thereof and mix with an ammonia absorbent added to the ammonia mixing chamber, and allow to take out a liquid stream from the lower part thereof for circulation to the primary spray absorption section or both the secondary and primary spray absorption sections.

In an embodiment, the apparatus further comprises a cooling-and-concentrating section in the upstream of the primary spray absorption section, wherein the cooling-and-concentrating section is configured to allow a gas stream to be treated, e.g. flue gas produced in coal-fired boilers, to be washed and cooled by a circulating washing liquid in the cooling-and-concentrating section whilst concentrating the circulating washing liquid in the cooling-and-concentrating section using the heat in the gas stream, and allow the cooled gas stream to enter the primary spray absorption section, for example, through a partition with a gas cap.

In a preferred embodiment, the individual sections of the apparatus are accommodated in an absorption tower.

In the apparatus of the present invention, the volume of the oxidation chamber can be determined based on the residence time required for oxidation, and the volume of the ammonia-mixing chamber is generally not less than the flow of a circulating pump over 2 minutes.

In some embodiments, the oxidation chamber and the ammonia-mixing chamber in the oxidation section may be provided separately. For example, the oxidation chamber and the ammonia-mixing chamber may be provided by two tanks in fluid communication with each other. For another example, the oxidation chamber may be provided in an absorption tower accommodating the individual sections of the apparatus, and the ammonia-mixing chamber may be provided in the absorption tower or outside the absorption tower.

In some additional embodiments, the oxidation chamber and the ammonia-mixing chamber in the oxidation section are formed by partition of a tank. In some further additional embodiments, both the oxidation chamber and the ammonia-mixing chamber in the oxidation section are provided in an absorption tower accommodating the individual sections of the apparatus, and are formed by partition of the lower part of the absorption tower. In such embodiments, the cross sectional area of the ammonia-mixing chamber accounts for up to 85%, e.g. no more than 60%, or no more than 50%, or no more than 40%, or from 8% to 50%, or from 10% to 40%, or from 12% to 35% of the cross sectional area of the tank/absorption tower.

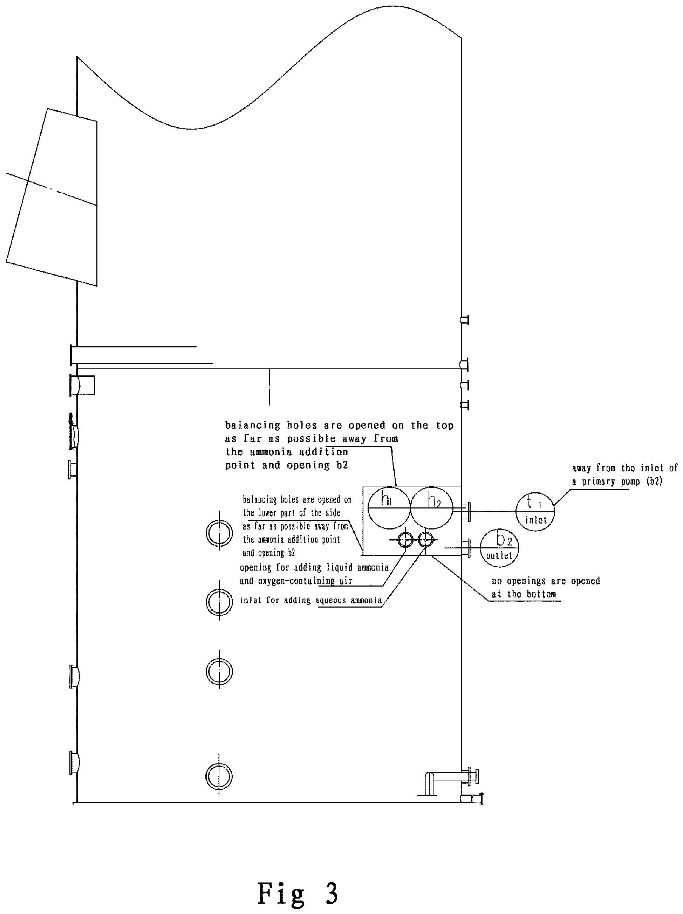

In general, the ammonia-mixing chamber is provided below the controlled level of the oxidation chamber. For example, the top of the ammonia-mixing chamber may be at least 20 cm below the controlled level of the oxidation chamber, preferably 100-200 cm below the controlled level of the oxidation chamber. In the apparatus of the present invention, there are no openings on the bottom surface of the ammonia-mixing chamber. One or more balancing holes in fluid communication with the oxidation chamber are opened on the side, preferably in the lower part of the side, e.g. in the 1/8 lower part, or in the 1/6 lower part, or in the 1/5 lower part, or in the 1/4 lower part, or in the 1/3 lower part of the side. The area of each opening is generally not more than 0.25 m², preferably not more than 0.1 m², more preferably not more than 0.05 m², and still more preferably not more than 0.01 m². The shape of the opening(s) is not particularly limited. For example, the opening(s) may be a round, a rectangle, a square, an oval, a hexagon, or the like. In a specific embodiment, the opening(s) is/are a square of 80 x 80 mm or 90 x 90 mm or 100 x 100 mm. In another specific embodiment, the opening(s) is/are a round with a diameter of 80, or 85, or 90, or 95, or 100, or 110 mm. The number of the openings on the side can be calculated according to the cross sectional area required to at least reach the flow of a single circulating pump at a flow velocity of 4 m/s and the area of a single opening. In general, the number of the openings on the side enables the total area of the openings to be equal to or larger than the cross sectional area required to reach the flow of a single circulating pump at a flow velocity of 4 m/s. There are also one or more openings on the top of the ammonia-mixing chamber. In general, the number of the openings on the top is 1-3 times as much as the number of the openings on the side, and the size of the openings on the top may be the same as or different from the size of the openings on the side, and preferably approximately the same. The shape of the openings on the top may be the same as or different from the shape of the openings on the side, and preferably approximately the same. The balancing holes on the side and top of the ammonia-mixing chamber should be generally provided away from the inlets and outlets of the individual streams. Figure 3 schematically describes arrangement of openings of an ammonia-mixing chamber in accordance with an embodiment of the present invention. The arrangement of the openings on the side and/or top of the ammonia-mixing chamber allows the communication between the two circulations.

The shape of the ammonia-mixing chamber is not critical. The shape can generally be determined according to its location and the ease of processing the equipment. For example, in the case where the ammonia-mixing chamber is connected to the tower or tank wall, it can be semi-cylindrical; in the case where the ammonia-mixing chamber is placed in the middle of the tower, it can be processed into a horizontal tank; and in the case where the ammonia-mixing chamber is placed outside the tower, it can be processed into a cylindrical vertical tank.

In a specific embodiment, the apparatus of the present invention is as shown in Figures 1-3, wherein the cross sectional area of the ammonia-mixing chamber 6 is about 15% to about 30%, e.g. 18%, 20%, 22% or 25%, of the cross sectional area of the absorption tower 1; the height of the ammonia-mixing chamber 6 is about 30 to about 42%, e.g. 35%, 38% or 40%, of the height of the oxidation section, and the overall ammonia-mixing chamber 6 is below the controlled level within the oxidation chamber 2, e.g. at least about 50 cm below the controlled level, e.g. 60 cm, 80 cm, 100 cm or 150 cm below the controlled level; the volume of the ammonia-mixing chamber 6 is about 15-40 m³, e.g. 18, 22 or 26 m³, the volume of the oxidation chamber 2 is about 150-400 m³, e.g. 180, 220 or 260 m³, and the volume ratio of the ammonia-mixing chamber 6 to the oxidation chamber 2 is about 1 : 10; the ammonia-mixing chamber 6 may have about 5 to about 15, e.g. 10, balancing holes in the lower part of its side (e.g. in the 1/4 or 1/5 or 1/6 of the lower part), and 10 to 30, e.g. 20, balancing holes on its roof, wherein the size of each hole may be 80 x 80 mm, and the balancing holes are provided away from the inlet of the reflux liquid and ammonia intake; the reflux liquid from the primary spray absorption section 8 and the reflux liquid from the secondary spray absorption section 9 are combined, wherein about 60-70 vol%, e.g. 65 vol%, of the total reflux liquid enters the ammonia-mixing chamber 6 and is mixed with liquid ammonia 5, while the remaining part of the reflux liquid enters the oxidation chamber 2; and based on the total amount of liquid ammonia fed to the ammonia-mixing chamber 6, for example, about 55% of liquid ammonia 5 is added directly to the ammonia-mixing chamber 6 (e.g. through a microporous distributor), the remaining 45% of liquid ammonia 5 is mixed with air 7 and then fed to the ammonia-mixing chamber 6, and the volume of air 7 is about 5%-about 10% of the volume of gaseous ammonia after liquid ammonia gasification. Valves may be set on each pipeline from/to the oxidation chamber 2 and the ammonia-mixing chamber 6 as required, to allow adjustment of the flows of materials from/to the two chambers, and in turn adjustment of the compositions of the liquid streams from/to the two chambers.

### Technical Effects Achieved by the Invention

1. The present invention advantageously solves the problems of ammonia slip and aerosol formation in ammonia-based desulphurization, so as to meet more stringent discharge requirements. Under the conditions that the SO₂ concentration in the original flue gas is not more than 30000 mg/Nm³, and the concentration of total particulate matters is not more than 30 mg/Nm³, in the treated clean flue gas, the SO₂ content can be no more than 35 mg/Nm³ and the total dust (including aerosols) content no more than 5 mg/Nm³.
2. In the process of the present invention, the ammonia slip in the treated clean flue gas is no more than 3 mg/Nm³, and the utilization rate of ammonia can reach 99% or more.
3. The apparatus of the present invention has a high purification efficiency, can be operated stably and reliably, avoids secondary pollution, and has a wide scope of adaptation.

### Embodiments

### Embodiment 1

Ammonia-based desulfurization of the flue gas from a coal combustion process was carried out by using an apparatus of the present invention, wherein the apparatus is basically as shown in Figures 1-3, except that the oxidation chamber and the ammonia-mixing chamber are provided by 2 tanks outside the absorption tower, with a DN500 communication pipe being provided in the middle part of the two tanks; a circulating liquid from the outlet in the lower part of the ammonia-mixing chamber enters the upper part of the primary spray absorption section, and a circulating liquid from the outlet in the lower part of the oxidation chamber enters the upper part of the secondary spray absorption section; a reflux liquid from the primary spray absorption section and a reflux liquid from the secondary spray absorption section converge at a gas-liquid separator between the cooling-and-concentrating section and the primary spray absorption section with a total amount of 2700 m³/h, wherein 60 vol% of the reflux liquid enters the ammonia-mixing chamber, and 40 vol% of the reflux liquid enters the oxidation chamber; liquid ammonia is added to the ammonia-mixing chamber uniformly and gently at a flow of 204 kg/h through a microporous distributor, and additional liquid ammonia is added to air at 300 kg/h through a distributor, and the air volume is 10% of the volume of gaseous ammonia after liquid ammonia gasification, and then the mixed gas is fed to the ammonia-mixing chamber; the volume of the ammonia-mixing chamber is 27 m³; the volume of the oxidation chamber is 200 m³; and no stream is led to downstream units to recover ammonium sulfate.

The flow of the original flue gas is 600000 Nm³/h, and its temperature is 145 °C, the SO₂ concentration is 1600 mg/Nm³, and the concentration of total particulate matters is 21.3 mg/Nm³. The pH of the circulating liquid at the outlet in the lower part of the ammonia-mixing chamber is 6.1, and the oxidation rate in the ammonia-mixing chamber is 98%. The pH of the circulating liquid at the outlet in the lower part of the oxidation chamber is 5.3, and the oxidation rate in the oxidation chamber is 99.5%. The gas temperature at the outlet of the cooling-and-concentrating section is 51.4 °C.

In the clean flue gas from the secondary spray absorption section, the SO₂ content is 17.3 mg/Nm³, the content of total particulate matters (including aerosols) is 1.8 mg/Nm³, and the amount of entrained ammonia is 0.35 mg/Nm³.

### Embodiment 2

The experiment of embodiment 1 was repeated, expect that the oxidation chamber and the ammonia-mixing chamber are provided in a same tank with a diameter of 5.5 m, the cross sectional area of the ammonia-mixing chamber is 18% of the cross sectional area of the tank, and the top of the ammonia-mixing chamber is 1 m lower than the liquid level in the oxidation chamber; 13 balancing holes are opened in the lower part on the side of the ammonia-mixing chamber, 22 balancing holes are opened on the roof, the size of each hole is 80 x 80 mm, and the balancing holes are provided away from the outlet of the circulating liquid and the ammonia intake; the volume of the ammonia-mixing chamber with a semi-cylindrical shape is 27 m³; the volume of the oxidation chamber is 220 m³; and the spray liquid from the primary spray absorption section and the spray liquid from the secondary spray absorption section are combined, wherein 70% of the combined reflux liquid is combined with 20% aqueous ammonia at 2522 kg/h and then enters the ammonia-mixing chamber, while the remaining reflux liquid enters the oxidation chamber.

The pH of the circulating liquid taken out from the ammonia-mixing chamber is 6.3, and the oxidation rate in the ammonia-mixing chamber is 98.6%. The pH of the circulating liquid taken out from the oxidation chamber is 5.4, and the oxidation rate in the oxidation chamber is 99.7%.

In the clean flue gas, the SO₂ content is 16.3 mg/Nm³, the content of total particulate matters (including aerosols) is 2.1 mg/Nm³ and the amount of entrained ammonia is 0.42 mg/Nm³.

### Embodiment 3

The experiment was carried out by using the apparatus of embodiment 1, expect that the oxidation chamber and the ammonia-mixing chamber are provided in a same tank with a diameter of 6 m, the cross sectional area of the ammonia-mixing chamber is 20% of the cross sectional area of the tank, the top of the ammonia-mixing chamber is 1.5 m lower than the liquid level in the oxidation chamber; 8 balancing holes are opened in the lower part on the side of the ammonia-mixing chamber, 13 balancing holes are opened on the roof, the size of each hole is 100 x 100 mm, and the balancing holes are provided away from the outlet of the circulating liquid and the ammonia intake; the volume of the ammonia-mixing chamber is 25 m³, the ammonia-mixing chamber is located in the center of the tank, and is a horizontal tank; the volume of the oxidation chamber is 228 m³; the spray liquid from the primary spray absorption section and the spray liquid from the secondary spray absorption section are not combined, but are fed to the ammonia-mixing chamber and the oxidation chamber respectively, wherein the flow of the reflux liquid to the ammonia-mixing chamber is 1700 m³/h, and the flow of the reflux liquid to the oxidation chamber is 600 m³/h; and 20% aqueous ammonia used as an absorbent is added at a flow of 5432 kg/h to the reflux liquid entering the ammonia-mixing chamber, and at a flow of 1316 kg/h to the reflux liquid entering the oxidation chamber.

The flow of the original flue gas is 300000 Nm³/h, and its temperature is 145 °C, the SO₂ concentration is 8500 mg/Nm³, and the concentration of total particulate matters is 28.5 mg/Nm³.

The pH of the circulating liquid taken out from the ammonia-mixing chamber is 6.5, and the oxidation rate in the ammonia-mixing chamber is 96.8%. The pH of the circulating liquid taken out from the oxidation chamber is 5.3, and the oxidation rate in the oxidation chamber is 99%.

In the clean flue gas, the SO₂ content is 31.4 mg/Nm³, the content of total particulate matters (including aerosols) is 2.8 mg/Nm³, and the amount of entrained ammonia is 0.7 mg/Nm³.

### Comparative embodiment:

The experiment of embodiment 3 was repeated, except that the ammonia-adding in different chambers was not employed, that is, the ammonia-mixing chamber and the oxidation chamber are combined into one; the spray liquid from the primary spray absorption section and the spray liquid from the secondary spray absorption section are combined and then enter the oxidation chamber at 2300 m³/h, before which 20% aqueous ammonia is added at 6770 kg/h; and after oxidation, the spray liquids return to the primary and secondary spray absorption sections for absorption, with the pH of the oxidized circulating liquid being 5.9 and the oxidation rate being 98.3%.

In the clean flue gas, the SO₂ content is 67 mg/Nm³, the content of total particulate matters (including aerosols) is 12 mg/Nm³, the amount of entrained ammonia is 2.7 mg/Nm³, and consumption of 20% aqueous ammonia is increased by 22 kg /h. These indexes are inferior to those of embodiment 3.

The detection methods of some indexes and main instruments used in the embodiments and the comparative embodiment are shown in Table 1 below.

**Table 1. Detection methods of some indexes and main instruments**

| S/N | Monitoring items | Names and numbers of analysis method/standard | Instrument names and models | Instrument Nos. |
|---|---|---|---|---|
| 1 | Flue dust | Determination of particulates and sampling methods of gaseous pollutants emitted from exhaust of stationary source GB/T16157-1996 | Laoying 3012H flue dust sampler Electronic balances BS224S and AB204-S | 8042448, 08244496 18360886 and 1119051201 |
| 2 | SO₂ | Determination of sulphur dioxide from exhaust of stationary source Fixed-potential electrolysis method HJ/T 57-2000 | Testo 350 flue gas analyzer | 10# and 1# |
| 4 | Ammonia | Air and exhaust - Determination of ammonia Nessler's reagent spectrophotometry HJ 533-2009 | Laoying 3072H 722 spectrophotometer | 02085809 and 2c5BP363 |
| 5 | Flue gas oxygen content | Specification and test procedures for continuous emission monitoring systems of flue gas emitted from stationary sources - Electrochemical process (Appendix B) (HJ/T 76-2007) | Testo 350 flue gas analyzer | 10# and 1# |
| 6 | Flue gas temperature | Determination of particulates and sampling methods of gaseous pollutants emitted from exhaust gas of stationary source - Platinum resistance method (GB/T16157-1996) | TES-1310 | / |
| 7 | Flue gas humidity | Specification and test procedures for continuous emission monitoring systems of flue gas emitted from stationary sources (Appendix B) (HJ/T76-2007) | Laoying 3012H flue dust sampler | 8042448 and 08244496 |

## Claims

1. An ammonia-based desulfurization process through ammonia-adding in different chambers, wherein an oxidation section comprises an oxidation chamber and an ammonia-mixing chamber in fluid communication with each other, and an ammonia absorbent is added to the ammonia-mixing chamber, and
wherein an absorption-oxidation cycle of the process comprises liquid circulation between the oxidation chamber and a secondary spray absorption section and liquid circulation between the ammonia-mixing chamber and a primary spray absorption section, and there is a communication between the two circulations at least through the fluid communication between the oxidation chamber and the ammonia-mixing chamber, and
wherein the primary spray absorption section is located upstream of the secondary spray absorption section, relative to the flow of a gas stream to be treated.

2. The process according to claim 1, comprising the following steps:
providing a sulfur dioxide-containing gas stream to be treated;
feeding the sulfur dioxide-containing gas stream to be treated into a cooling-and-concentrating section, where the gas stream is washed and cooled using a circulating washing liquid in the cooling-and-concentrating section whilst concentrating the circulating washing liquid in the cooling-and-concentrating section using the heat in the gas stream;
allowing the gas stream from the cooling-and-concentrating section to enter the primary spray absorption section, where the gas stream is in countercurrent contact with a first spray absorption liquid;
allowing the gas stream from the primary spray absorption section to enter the secondary spray absorption section, where the gas stream is in countercurrent contact with a second spray absorption liquid;
feeding the liquid stream from a bottom of the primary spray absorption section and the liquid stream from a bottom of the secondary spray absorption section as a reflux liquid respectively into the ammonia-mixing chamber and the oxidation chamber, or combining the two liquid streams and then separately feeding the combined liquid stream into the ammonia-mixing chamber and the oxidation chamber, feeding an oxygen-containing gas into the oxidation chamber, and feeding an ammonia absorbent into the ammonia-mixing chamber, which is in fluid communication with the oxidation chamber;
feeding at least part of a liquid stream taken out from a lower part of the oxidation chamber as the second spray absorption liquid into the secondary spray absorption section, and optionally, feeding at least part of a liquid stream taken out from a lower part of the oxidation chamber into a subsequent unit to recover ammonium sulfate;
feeding a liquid stream taken out from a lower part of the ammonia-mixing chamber as the first spray absorption liquid into the primary spray absorption section; and
venting the gas stream from an upper part of the secondary spray absorption section after removing droplets, optionally after further removal of fine particulate matters.

3. The process according to claim 2, which has one of the following characteristics:
- the sulfur dioxide-containing gas to be treated is a flue gas produced in coal combustion or a flue gas produced in a fluidized-bed catalytic cracking process or a flue gas produced in other industrial processes;
- the ammonia absorbent is in the form of liquid ammonia, gaseous ammonia, an aqueous ammonia or a combination thereof;
- the oxygen-containing gas is oxygen, air, oxygen-enriched air or oxygen-poor air;
- the ammonia absorbent is added to a liquid stream using a tubular distributor, a microporous distributor or a static mixer, and/or the ammonia absorbent is first mixed with an oxygen-containing gas, and then the mixed gas stream is directly added to the ammonia-mixing chamber;
- the pH of a circulating liquid withdrawn from the lower part of the ammonia-mixing chamber is in a range of 4.6-8.0;
- the pH of a circulating liquid withdrawn from the lower part of the oxidation chamber is in a range of 4.0-6.8;
- no additional ammonia absorbent is added to the oxidation chamber, expect for the ammonia absorbent in the reflux liquid entering the oxidation chamber and the ammonia absorbent entering the oxidation chamber from the ammonia-mixing chamber;
- an oxidation rate in the ammonia-mixing chamber is in a range of 93%-99.5%;
- an oxidation rate in the oxidation chamber is not less than 98.5%;
- based on a total amount of the reflux liquid from the primary spray absorption section and the secondary spray absorption section, 30%-85% of the reflux liquid enters the ammonia-mixing chamber, and the remaining reflux liquid enters the oxidation chamber; and
- a valve-controlled pipeline is provided between a pipeline by which the circulating liquid is taken out from the lower part of the oxidation chamber and a pipeline by which the circulating liquid is taken out from the lower part of the ammonia-mixing chamber, so as to allow adjustment of the amounts and/or pH values of the circulating liquids entering the primary spray absorption section and the secondary spray absorption section respectively.

4. The process according to claim 2, wherein the spray liquid from the bottom of the primary spray absorption section and the spray liquid from the bottom of the secondary spray absorption section are combined, wherein about 30%-85% of the combined reflux liquid enters the ammonia-mixing chamber to be combined with the ammonia absorbent, and the remaining part of the combined reflux liquid enters the oxidation chamber.

5. The process according to claim 4, wherein at least part of the ammonia absorbent enters the reflux liquid part to be fed to the ammonia-mixing chamber through a microporous distributor or is fed directly to the ammonia-mixing chamber, and/or at least part of the ammonia absorbent is mixed with the oxygen-containing gas, and then added to the ammonia-mixing chamber.

6. The process according to any one of claims 1-2, wherein liquid ammonia is used as the absorbent and the liquid ammonia is added through a mixer to a solutionto/in the ammonia-mixing chamber , and/or the liquid ammonia is first mixed with an oxygen-containing gas and then added to the ammonia-mixing chamber, wherein the amount of the oxygen-containing gas is 3%-10% of the volume of gaseous ammonia after liquid ammonia gasification.

7. The process according to any one of claims 2-6, wherein the ammonia absorbent is also added in at least one of the cooling-and-concentrating section, the primary spray absorption section and the secondary spray absorption section.

8. An apparatus for implementing an ammonia-based desulphurization process, comprising:
a primary spray absorption section, configured to allow countercurrent contact between a first spray liquid sprayed from an upper part thereof and a gas stream entering from a lower part thereof, allow to take out the contacted first spray liquid from the lower part thereof to provide a reflux liquid, and allow the preliminarily absorbed gas stream to enter a secondary spray absorption section;
the secondary spray absorption section, configured to allow countercurrent contact between a second spray liquid sprayed from an upper part thereof and the gas stream entering from the primary spray absorption section, and allow to take out the contacted second spray liquid from a lower part thereof to provide a reflux liquid; and
an oxidation section, comprising:
an oxidation chamber, configured to allow contact and reaction between at least part of the reflux liquid from the secondary spray absorption section or part of a combined reflux liquid from the primary and secondary spray absorption sections and an oxygen-containing gas, and allow to take out at least part of the liquid phase from the lower part thereof for circulation to the secondary spray absorption section or both the secondary and primary spray absorption sections; and
an ammonia-mixing chamber, configured to be in fluid communication with the oxidation chamber through openings on a top and/or side thereof, allow at least part of the reflux liquid from the primary spray absorption section or part of the combined reflux liquid from the primary and secondary spray absorption sections to enter from an upper part thereof and mix with an ammonia absorbent added to the ammonia-mixing chamber, and allow to take out a liquid stream from a lower part thereof for circulation to the primary spray absorption section or both the secondary and primary spray absorption sections.

9. The apparatus according to claim 8, further comprising a cooling-and-concentrating section in the upstream of the primary spray absorption section, the cooling-and-concentrating section being configured to allow a gas stream to be treated to be washed and cooled by a circulating washing liquid in the cooling-and-concentrating section whilst concentrating the circulating washing liquid in the cooling-and-concentrating section using the heat in the gas stream, and allow the cooled gas stream to enter the primary spray absorption section as the gas stream to be contacted with the first spray liquid.

10. The apparatus according to claim 8 or 9, which has one of the following characteristics:
- the oxidation chamber and the ammonia-mixing chamber in the oxidation section are provided separately, or the oxidation chamber is provided in an absorption tower accommodating individual sections of the apparatus, and the ammonia-mixing chamber is provided in the absorption tower or outside the absorption tower; or the oxidation chamber and the ammonia-mixing chamber in the oxidation section are formed by partition of a tank; or both the oxidation chamber and the ammonia-mixing chamber in the oxidation section are provided in the absorption tower accommodating individual sections of the apparatus, and are formed by partition of the lower part of the absorption tower;
- the volume of the ammonia-mixing chamber is not less than the amount of the liquid taken out from the lower part over 2 minutes; and
- a valve-controlled pipeline is provided between a pipeline by which the circulating liquid is taken out from the lower part of the oxidation chamber and a pipeline by which the circulating liquid is taken out from the lower part of the ammonia-mixing chamber, so as to allow adjustment of the amounts and/or pH values of the circulating liquids entering the primary spray absorption section and the secondary spray absorption section respectively.

11. The apparatus according to claim 8, wherein the oxidation chamber and the ammonia-mixing chamber in the oxidation section are formed by partition of a tank, or both are provided in the absorption tower accommodating individual sections of the apparatus, and are formed by partition of the lower part of the absorption tower, wherein the cross sectional area of the ammonia-mixing chamber accounts for from 5% to 50% of the cross sectional area of the tank/absorption tower, and wherein there are openings on the side and/or top of the ammonia-mixing chamber.

12. The apparatus according to claim 11, wherein the ammonia-mixing chamber is provided with its top being at least 20 cm below a controlled level in the oxidation chamber.

13. The apparatus according to claim 8, wherein openings are provided on the side and/or top of the ammonia-mixing chamber to achieve fluid communication between the ammonia-mixing chamber and the oxidation chamber, and wherein the apparatus has one of the following characteristics:
- one or more holes are opened in the 1/3 lower part on the side of the ammonia-mixing chamber;
- there are one or more openings on a roof of the ammonia-mixing chamber;
- the area of each opening of the ammonia-mixing chamber is no more than 0.25 m²;
- one or more openings of the ammonia-mixing chamber are round, rectangular, square, oval or hexagonal; and
- the openings on the side and/or top of the ammonia-mixing chamber are provided away from the inlets and outlets of the individual streams.

14. The apparatus according to claim 8, wherein openings are provided at least on the side of the ammonia-mixing chamber to achieve fluid communication between the ammonia-mixing chamber and the oxidation chamber, and wherein the number of the openings on the side enables the total area of the openings to be equal to or larger than the cross sectional area required to reach the flow of a circulating pump between the ammonia-mixing chamber and the primary spray absorption section at a flow velocity of 4 m/s.

15. The process according to claim 1, which has at least one of the following characteristics:
- the ammonia absorbent is in the form of liquid ammonia, gaseous ammonia, an aqueous ammonia or a combination thereof;
- the ammonia absorbent is added to a liquid stream using a tubular distributor, a microporous distributor or a static mixer, and/or the ammonia absorbent is first mixed with an oxygen-containing gas, and then the mixed gas stream is directly added to the ammonia-mixing chamber;
- no additional ammonia absorbent is added to the oxidation chamber, expect for the ammonia absorbent in a reflux liquid entering the oxidation chamber and the ammonia absorbent entering the oxidation chamber from the ammonia-mixing chamber;
- an oxidation rate in the ammonia-mixing chamber is in a range of 93%-99.5%;
- an oxidation rate in the oxidation chamber is not less than 98.5%;
- based on a total amount of the reflux liquid from the primary spray absorption section and the secondary spray absorption section, 30%-85% of the reflux liquid enters the ammonia-mixing chamber, and the remaining reflux liquid enters the oxidation chamber; and
- a valve-controlled pipeline is provided between a pipeline by which the circulating liquid is taken out from the lower part of the oxidation chamber and a pipeline by which the circulating liquid is taken out from the lower part of the ammonia-mixing chamber, so as to allow adjustment of the amounts and/or pH values of the circulating liquids entering the primary spray absorption section and the secondary spray absorption section respectively.

## Patentansprüche

1. Entschwefelungsverfahren auf Ammoniakbasis durch Ammoniakzugabe in verschiedenen Kammern, wobei ein Oxidationsabschnitt eine Oxidationskammer und eine Ammoniak-Mischkammer, die miteinander in Fluidverbindung stehen, umfasst und ein Ammoniakabsorptionsmittel zu der Ammoniak-Mischkammer zugegeben wird, und
wobei ein Absorptions-Oxidations-Zyklus des Verfahrens Flüssigkeitszirkulation zwischen der Oxidationskammer und einem sekundären Sprühabsorptionsabschnitt und Flüssigkeitszirkulation zwischen der Ammoniak-Mischkammer und einem primären Sprühabsorptionsabschnitt umfasst, und es eine Verbindung zwischen den zwei Zirkulationen mindestens durch die Fluidverbindung zwischen der Oxidationskammer und der Ammoniak-Mischkammer gibt, und
wobei der primäre Sprühabsorptionsabschnitt oberhalb des sekundären Sprühabsorptionsabschnitts lokalisiert ist, relativ zum Fluss eines Gasstroms, der behandelt werden soll.

2. Verfahren nach Anspruch 1, umfassend die folgenden Schritte:
Bereitstellen eines schwefeldioxidhaltigen Gasstroms, der behandelt werden soll;
Einspeisen des schwefeldioxidhaltigen Gasstroms, der behandelt werden soll, in einen Kühl- und Konzentrationsabschnitt, wo der Gasstrom unter Verwendung einer zirkulierenden Waschflüssigkeit im Kühl- und Konzentrationsabschnitt gewaschen und gekühlt wird, während die zirkulierende Waschflüssigkeit in dem Kühl- und Konzentrationsabschnitt unter Verwendung der Wärme in dem Gasstrom konzentriert wird;
Ermöglichen, dass der Gasstrom aus dem Kühl- und Konzentrationsabschnitt in den primären Sprühabsorptionsabschnitt eintritt, wo der Gasstrom in Gegenstrom-Kontakt mit einer ersten Sprühabsorptionsflüssigkeit ist;
Ermöglichen, dass der Gasstrom aus dem primären Sprühabsorptionsabschnitt in den sekundären Sprühabsorptionsabschnitt eintritt, wo der Gasstrom in Gegenstrom-Kontakt mit einer zweiten Sprühabsorptionsflüssigkeit ist;
Einspeisen des Flüssigkeitsstroms von einem Boden des primären Sprühabsorptionsabschnitts und des Flüssigkeitsstroms von einem Boden des sekundären Sprühabsorptionsabschnitts als eine Rücklaufflüssigkeit jeweils in die Ammoniak-Mischkammer und die Oxidationskammer oder Kombinieren der zwei Flüssigkeitsströme und dann getrenntes Einspeisen des kombinierten Flüssigkeitsstroms in die Ammoniak-Mischkammer und die Oxidationskammer, Einspeisen eines sauerstoffhaltigen Gases in die Oxidationskammer und Einspeisen eines Ammoniakabsorptionsmittels in die Ammoniak-Mischkammer, die in Fluidverbindung mit der Oxidationskammer ist;
Einspeisen von mindestens einem Teil eines Flüssigkeitsstroms, der aus einem unteren Teil der Oxidationskammer als die zweite Sprühabsorptionsflüssigkeit entnommen wurde, in den sekundären Sprühabsorptionsabschnitt und gegebenenfalls Einspeisen von mindestens einem Teil eines Flüssigkeitsstroms, der aus einem unteren Teil der Oxidationskammer entnommen wurde, in eine nachfolgende Einheit zur Rückgewinnung von Ammoniumsulfat;
Einspeisen eines Flüssigkeitsstroms, der aus einem unteren Teil der Ammoniak-Mischkammer als die erste Sprühabsorptionsflüssigkeit entnommen wurde, in den primären Sprühabsorptionsabschnitt; und
Ablassen des Gasstroms aus einem oberen Teil des sekundären Sprühabsorptionsabschnitts nach Entfernen von Tröpfchen, gegebenenfalls nach dem weiteren Entfernen von Feinstäube.

3. Verfahren nach Anspruch 2, das eine der folgenden Eigenschaften aufweist:
- das schwefeldioxidhaltige Gas, das behandelt werden soll, ist ein Rauchgas, das bei der Kohleverbrennung hergestellt wurde oder ein Rauchgas, das in einem katalytischen Wirbelschicht-Crackverfahren hergestellt wurde oder ein Rauchgas, das in anderen industriellen Verfahren hergestellt wurde;
- das Ammoniak-Absorptionsmittel liegt in Form von flüssigem Ammoniak, gasförmigem Ammoniak, einem wässrigen Ammoniak oder einer Kombination davon vor;
- das sauerstoffhaltige Gas ist Sauerstoff, Luft, mit Sauerstoff angereicherte Luft oder sauerstoffarme Luft;
- das Ammoniak-Absorptionsmittel wird zu einem Flüssigkeitsstrom unter Verwendung eines röhrenförmigen Verteilers, eines mikroporösen Verteilers oder eines statischen Mixers zugegeben, und/oder das Ammoniak-Absorptionsmittel wird zuerst mit einem sauerstoffhaltigen Gas gemischt, und dann wird der gemischte Gasstrom direkt zu der Ammoniak-Mischkammer gegeben;
- der pH-Wert einer zirkulierenden Flüssigkeit, die aus dem unteren Teil der Ammoniak-Mischkammer entnommen wurde, ist in einem Bereich von 4,6 - 8,0;
- der pH-Wert einer zirkulierenden Flüssigkeit, die aus dem unteren Teil der Oxidationskammer entnommen wurde, ist in einem Bereich von 4,0 - 6,8;
- kein zusätzliches Ammoniak-Absorptionsmittel wird der Oxidationskammer zugegeben, außer das Ammoniak-Absorptionsmittel in der Rücklaufflüssigkeit, die in die Oxidationskammer eintritt und das Ammoniak-Absorptionsmittel, das in die Oxidationskammer aus der Ammoniak-Mischkammer eintritt;
- eine Oxidationsgeschwindigkeit in der Ammoniak-Mischkammer ist in einem Bereich von 93% - 99,5%;
- eine Oxidationsgeschwindigkeit in der Oxidationskammer ist nicht weniger als 98,5%;
- basierend auf einer Gesamtmenge der Rücklaufflüssigkeit aus dem primären Sprühabsorptionsabschnitt und dem sekundären Sprühabsorptionsabschnitt, treten 30% - 85% der Rücklaufflüssigkeit in die Ammoniak-Mischkammer ein und die verbleibende Rücklaufflüssigkeit tritt in die Oxidationskammer ein; und
- eine ventilgesteuerte Rohrleitung wird zwischen einer Rohrleitung, durch die die zirkulierende Flüssigkeit von dem unteren Teil der Oxidationskammer entnommen wird, und einer Rohrleitung, durch die die zirkulierende Flüssigkeit von dem unteren Teil der Ammoniak-Mischkammer entnommen wird, bereitgestellt, um eine Einstellung der Mengen und/oder pH-Werte der zirkulierenden Flüssigkeiten, die in den primären Sprühabsorptionsabschnitt bzw. den sekundären Sprühabsorptionsabschnitt eintreten, zu ermöglichen.

4. Verfahren nach Anspruch 2, wobei die Sprühflüssigkeit von dem Boden des primären Sprühabsorptionsabschnitts und die Sprühflüssigkeit von dem Boden des sekundären Sprühabsorptionsabschnitts kombiniert werden, wobei etwa 30% - 85% der kombinierten Rücklaufflüssigkeit in die Ammoniak-Mischkammer eintreten, um mit dem Ammoniakabsorptionsmittel kombiniert zu werden, und der verbleibende Teil der kombinierten Rücklaufflüssigkeit in die Oxidationskammer eintritt.

5. Verfahren nach Anspruch 4, wobei mindestens ein Teil des Ammoniak-Absorptionsmittels in den Rücklaufflüssigkeitsteil eintritt, um durch einen mikroporösen Verteiler in die Ammoniak-Mischkammer eingespeist zu werden, oder direkt in die Ammoniak-Mischkammer eingespeist wird und/oder mindestens ein Teil des Ammoniak-Absorptionsmittels mit dem sauerstoffhaltigen Gas gemischt wird und dann zu der Ammoniak-Mischkammer gegeben wird.

6. Verfahren nach einem der Ansprüche 1 - 2, wobei flüssiges Ammoniak als das Absorptionsmittel verwendet wird und das flüssige Ammoniak durch einen Mixer zu einer Lösung zu der/in die Ammoniak-Mischkammer gegeben wird und/oder das flüssige Ammoniak zuerst mit einem sauerstoffhaltigen Gas gemischt wird und dann zu der Ammoniak-Mischkammer gegeben wird, wobei die Menge an sauerstoffhaltigem Gas 3% - 10% des Volumens von gasförmigem Ammoniak nach der flüssigen Ammoniakvergasung ist.

7. Verfahren nach einem der Ansprüche 2 - 6, wobei das Ammoniak-Absorptionsmittel auch zu mindestens einem aus Kühl- und Konzentrationsabschnitt, primärem Sprühabsorptionsabschnitt und sekundärem Sprühabsorptionsabschnitt gegeben wird.

8. Vorrichtung zum Implementieren eines Entschwefelungsverfahrens auf Ammoniakbasis, umfassend:
einen primären Sprühabsorptionsabschnitt, der konfiguriert ist, einen Gegenstromkontakt zwischen einer ersten Sprühflüssigkeit, die von einem oberen Teil davon gesprüht wird, und einem Gasstrom, der von einem unteren Teil davon eintritt, zu ermöglichen, die Entnahme der kontaktierten ersten Sprühflüssigkeit von dem unteren Teil davon zu ermöglichen, um eine Rücklaufflüssigkeit bereitzustellen und den Eintritt des vorläufig absorbierten Gasstroms in einen sekundären Sprühabsorptionsabschnitt zu ermöglichen;
den sekundären Sprühabsorptionsabschnitt, der konfiguriert ist, einen Gegenstromkontakt zwischen einer zweiten Sprühflüssigkeit, die von einem oberen Teil davon gesprüht wird, und dem Gasstrom, der von dem primären Sprühabsorptionsabschnitt eintritt, zu ermöglichen und die Entnahme der kontaktierten zweiten Sprühflüssigkeit von einem unteren Teil davon zu ermöglichen, um eine Rücklaufflüssigkeit bereitzustellen;
und einen Oxidationsabschnitt, umfassend:
eine Oxidationskammer, die konfiguriert ist, einen Kontakt und eine Reaktion zwischen mindestens einem Teil der Rücklaufflüssigkeit von dem sekundären Sprühabsorptionsabschnitt oder einem Teil einer kombinierten Rücklaufflüssigkeit von den primären und sekundären Sprühabsorptionsabschnitten und einem Sauerstoffhaltigen Gas zu ermöglichen und die Entnahme mindestens eines Teils der flüssigen Phase von dem unteren Teil davon zur Zirkulation zum sekundären Sprühabsorptionsabschnitt oder sowohl zu den sekundären als auch primären Sprühabsorptionsabschnitten zu ermöglichen; und
eine Ammoniak-Mischkammer, die konfiguriert ist, mit der Oxidationskammer durch Öffnungen an einer Oberseite und/oder Seite davon in Fluidverbindung zu stehen, den Eintritt mindestens eines Teils der Rücklaufflüssigkeit von dem primären Sprühabsorptionsabschnitt oder eines Teils der kombinierten Rücklaufflüssigkeit von den primären und sekundären Sprühabsorptionsabschnitten von einem oberen Teil davon zu ermöglichen und das Mischen mit einem Ammoniakabsorptionsmittel, das zu der Ammoniak-Mischkammer gegeben wurde, zu ermöglichen, und die Entnahme eines Flüssigkeitsstroms von einem unteren Teil davon zur Zirkulation zum primären Sprühabsorptionsabschnitt oder sowohl zu den sekundären als auch primären Sprühabsorptionsabschnitten zu ermöglichen.

9. Vorrichtung nach Anspruch 8, weiterhin umfassend einen Kühl- und Konzentrationsabschnitt stromaufwärts des primären Sprühabsorptionsabschnitts, wobei der Kühl- und Konzentrationsabschnitt konfiguriert ist, Waschen und Kühlen eines Gasstroms, der behandelt werden soll, durch eine zirkulierende Waschflüssigkeit in dem Kühl- und Konzentrationsabschnitt zu ermöglichen, während die zirkulierende Waschflüssigkeit in dem Kühl- und Konzentrationsabschnitt unter Verwendung der Wärme in dem Gasstrom konzentriert wird und den Eintritt des gekühlten Gasstroms in den primären Sprühabsorptionsabschnitt als der Gasstrom, der mit der ersten Sprühflüssigkeit kontaktiert werden soll, zu ermöglichen.

10. Vorrichtung nach Anspruch 8 oder 9, die eine der folgenden Eigenschaften aufweist:
- die Oxidationskammer und die Ammoniak-Mischkammer im Oxidationsabschnitt werden getrennt bereitgestellt, oder die Oxidationskammer wird in einem Absorptionsturm bereitgestellt, der einzelne Abschnitte der Vorrichtung beherbergt, und die Ammoniak-Mischkammer wird im Absorptionsturm oder außerhalb des Absorptionsturms bereitgestellt; oder die Oxidationskammer und die Ammoniak-Mischkammer in dem Oxidationsabschnitt werden durch Unterteilung eines Tanks gebildet; oder sowohl die Oxidationskammer als auch die Ammoniak-Mischkammer in dem Oxidationsabschnitt werden in dem Absorptionsturm bereitgestellt, der einzelne Abschnitte der Vorrichtung beherbergt, und werden durch Unterteilung des unteren Teils des Absorptionsturms gebildet;
- das Volumen der Ammoniak-Mischkammer ist nicht weniger als die Flüssigkeitsmenge, die über 2 Minuten aus dem unteren Teil entnommen wird; und
- eine ventilgesteuerte Rohrleitung wird zwischen einer Rohrleitung, durch die die zirkulierende Flüssigkeit von dem unteren Teil der Oxidationskammer entnommen wird, und einer Rohrleitung, durch die die zirkulierende Flüssigkeit von dem unteren Teil der Ammoniak-Mischkammer entnommen wird, bereitgestellt, um eine Einstellung der Mengen und/oder pH-Werte der zirkulierenden Flüssigkeiten, die in den primären Sprühabsorptionsabschnitt bzw. den sekundären Sprühabsorptionsabschnitt eintreten, zu ermöglichen.

11. Vorrichtung nach Anspruch 8, wobei die Oxidationskammer und die Ammoniak-Mischkammer in dem Oxidationsabschnitt durch Unterteilung eines Tanks gebildet werden oder beide in dem Absorptionsturm bereitgestellt werden, der einzelne Abschnitte der Vorrichtung beherbergt, und durch Unterteilung des unteren Teils des Absorptionsturms gebildet werden, wobei die Querschnittsfläche der Ammoniak-Mischkammer von 5% bis 50% der Querschnittsfläche des Tanks/Absorptionsturms beträgt, und wobei es Öffnungen an der Seite und/oder Oberseite der Ammoniak-Mischkammer gibt.

12. Vorrichtung nach Anspruch 11, wobei die Ammoniak-Mischkammer bereitgestellt wird, wobei ihre Oberseite mindestens 20 cm unter einem kontrollierten Level in der Oxidationskammer ist.

13. Vorrichtung nach Anspruch 8, wobei Öffnungen auf der Seite und/oder Oberseite der Ammoniak-Mischkammer bereitgestellt werden, um eine Fluidverbindung zwischen der Ammoniak-Mischkammer und der Oxidationskammer zu erzielen, und wobei die Vorrichtung eine der folgenden Eigenschaften aufweist:
- ein oder mehrere Löcher werden im 1/3 unteren Teil auf der Seite der Ammoniak-Mischkammer geöffnet
- auf einem Dach der Ammoniak-Mischkammer gibt es eine oder mehrere Öffnungen;
- die Fläche jeder Öffnung der Ammoniak-Mischkammer ist nicht mehr als 0,25 m²;
- eine oder mehrere Öffnungen der Ammoniak-Mischkammer sind rund, rechteckig, quadratisch, oval oder sechseckig; und
- die Öffnungen an der Seite und/oder Oberseite der Ammoniak-Mischkammer werden fernab von den Einlässen und Auslässen der einzelnen Ströme bereitgestellt.

14. Vorrichtung nach Anspruch 8, wobei Öffnungen mindestens auf der Seite der Ammoniak-Mischkammer bereitgestellt werden, um eine Fluidverbindung zwischen der Ammoniak-Mischkammer und der Oxidationskammer zu erzielen, und wobei die Anzahl der Öffnungen an der Seite ermöglicht, dass die Gesamtfläche der Öffnungen gleich zu oder größer als die Querschnittsfläche ist, die erforderlich ist, um den Fluss einer Umwälzpumpe zwischen der Ammoniak-Mischkammer und dem primären Sprühabsorptionsabschnitt bei einer Fließgeschwindigkeit von 4 m/s zu erreichen.

15. Verfahren nach Anspruch 1, das mindestens eine der folgenden Eigenschaften aufweist:
- das Ammoniakabsorptionsmittel ist in Form von flüssigem Ammoniak, gasförmigem Ammoniak, einem wässrigen Ammoniak oder einer Kombination davon;
- das Ammoniakabsorptionsmittel wird zu einem Flüssigkeitsstrom unter Verwendung eines röhrenförmigen Verteilers, eines mikroporösen Verteilers oder eines statischen Mixers gegeben, und/oder das Ammoniakabsorptionsmittel wird zuerst mit einem Sauerstoff-haltigen Gas gemischt und dann wird der gemischte Gasstrom direkt zu der Ammoniak-Mischkammer gegeben;
- kein zusätzliches Ammoniakabsorptionsmittel wird zu der Oxidationskammer gegeben, außer das Ammoniakabsorptionsmittel in einer Rücklaufflüssigkeit, die in die Oxidationskammer eintritt und das Ammoniakabsorptionsmittel, das in die Oxidationskammer aus der Ammoniak-Mischkammer eintritt;
- eine Oxidationsgeschwindigkeit in der Ammoniak-Mischkammer ist in einem Bereich von 93% - 99,5%;
- eine Oxidationsgeschwindigkeit in der Oxidationskammer ist nicht weniger als 98,5%;
- basierend auf einer Gesamtmenge der Rücklaufflüssigkeit von dem primären Sprühabsorptionsabschnitt und dem sekundären Sprühabsorptionsabschnitt, 30% - 85% der Rücklaufflüssigkeit in die Ammoniak-Mischkammer eintritt und die verbleibende Rücklaufflüssigkeit in die Oxidationskammer eintritt; und
- eine Ventil-gesteuerte Rohrleitung wird zwischen einer Rohrleitung, durch die die zirkulierende Flüssigkeit von dem unteren Teil der Oxidationskammer entnommen wird, und einer Rohrleitung, durch die die zirkulierende Flüssigkeit von dem unteren Teil der Ammoniak-Mischkammer entnommen wird, bereitgestellt, um die Einstellung der Mengen und/oder pH-Werte der zirkulierenden Flüssigkeiten, die in den primären Sprühabsorptionsabschnitt bzw. den sekundären Sprühabsorptionsabschnitt eintreten, zu ermöglichen.

## Revendications

1. Procédé de désulfuration à base d'ammoniac par le biais de l'ajout d'ammoniac dans différentes chambres, dans lequel une section d'oxydation comprend une chambre d'oxydation et une chambre de mélange d'ammoniac en communication fluidique l'une avec l'autre, et un absorbant d'ammoniac est ajouté à la chambre de mélange d'ammoniac, et
dans lequel un cycle d'absorption-oxydation du procédé comprend une circulation de liquide entre la chambre d'oxydation et une section d'absorption par pulvérisation secondaire et une circulation de liquide entre la chambre de mélange d'ammoniac et une section d'absorption par pulvérisation primaire, et il y a une communication entre les deux circulations au moins par le biais de la communication fluidique entre la chambre d'oxydation et la chambre de mélange d'ammoniac, et
dans lequel la section d'absorption par pulvérisation primaire est située en amont de la section d'absorption par pulvérisation secondaire, par rapport à l'écoulement d'un courant de gaz à traiter.

2. Procédé selon la revendication 1, comprenant les étapes suivantes :
prévoir un courant de gaz contenant du dioxyde de soufre à traiter ;
amener le courant de gaz contenant du dioxyde de soufre à traiter dans une section de refroidissement et de concentration, où le courant de gaz est lavé et refroidi en utilisant un liquide de lavage circulant dans la section de refroidissement et de concentration tout en concentrant le liquide de lavage circulant dans la section de refroidissement et de concentration en utilisant la chaleur dans le courant de gaz ;
permettre au courant de gaz en provenance de la section de refroidissement et de concentration d'entrer dans la section d'absorption par pulvérisation primaire, où le courant de gaz est en contact à contre-courant avec un premier liquide d'absorption par pulvérisation ;
permettre au courant de gaz en provenance de la section d'absorption par pulvérisation primaire d'entrer dans la section d'absorption par pulvérisation secondaire, où le courant de gaz est en contact à contre-courant avec un second liquide d'absorption par pulvérisation ;
amener le courant de liquide en provenance d'un fond de la section d'absorption par pulvérisation primaire et le courant de liquide en provenance d'un fond de la section d'absorption par pulvérisation secondaire en tant que liquide de reflux respectivement dans la chambre de mélange d'ammoniac et la chambre d'oxydation, ou combiner les deux courants de liquide et amener ensuite séparément le courant de liquide combiné dans la chambre de mélange d'ammoniac et la chambre d'oxydation, amener un gaz contenant de l'oxygène dans la chambre d'oxydation, et amener un absorbant d'ammoniac dans la chambre de mélange d'ammoniac, qui est en communication fluidique avec la chambre d'oxydation ;
amener au moins une partie d'un courant de liquide prélevé d'une partie inférieure de la chambre d'oxydation en tant que second liquide d'absorption par pulvérisation dans la section d'absorption par pulvérisation secondaire, et facultativement, amener au moins une partie d'un courant de liquide prélevé d'une partie inférieure de la chambre d'oxydation dans une unité consécutive pour récupérer du sulfate d'ammonium ;
amener un courant de liquide prélevé d'une partie inférieure de la chambre de mélange d'ammoniac en tant que premier liquide d'absorption par pulvérisation dans la section d'absorption par pulvérisation primaire ; et
évacuer le courant de gaz d'une partie supérieure de la section d'absorption par pulvérisation secondaire après avoir enlevé des gouttelettes, facultativement après un enlèvement supplémentaire de matières particulaires fines.

3. Procédé selon la revendication 2, qui a une des caractéristiques suivantes :
- le gaz contenant du dioxyde de soufre à traiter est un gaz de carneau produit lors de la combustion de charbon ou un gaz de carneau produit dans un procédé de craquage catalytique en lit fluidisé ou un gaz de carneau produit dans d'autres procédés industriels ;
- l'absorbant d'ammoniac est sous forme d'ammoniac liquide, d'ammoniac gazeux, d'ammoniac aqueux ou d'une combinaison de ceux-ci ;
- le gaz contenant de l'oxygène est l'oxygène, l'air, de l'air enrichi en oxygène ou de l'air pauvre en oxygène ;
- l'absorbant d'ammoniac est ajouté à un courant de liquide en utilisant un distributeur tubulaire, un distributeur microporeux ou un mélangeur statique et/ou l'absorbant d'ammoniac est d'abord mélangé avec un gaz contenant de l'oxygène et ensuite le courant de gaz mixte est ajouté directement à la chambre de mélange d'ammoniac ;
- le pH d'un liquide circulant retiré de la partie inférieure de la chambre de mélange est dans une plage de 4,6 à, 8,0 ;
- le pH d'un liquide d'un liquide circulant retiré de la partie inférieure de la chambre d'oxydation est dans une plage de 4,0 à 6,8 ;
- aucun absorbant d'ammoniac additionnel n'est ajouté à la chambre d'oxydation, à l'exception de l'absorbant d'ammoniac dans le liquide de reflux entrant dans la chambre d'oxydation et de l'absorbant d'ammoniac entrant dans la chambre d'oxydation à partir de la chambre de mélange d'ammoniac ;
- un taux d'oxydation dans la chambre de mélange d'ammoniac est dans une plage de 93 % à 99,5 % ;
- un taux d'oxydation dans la chambre d'oxydation n'est pas inférieur à 98,5 % ;
- sur la base d'une quantité totale du liquide de reflux en provenance de la section d'absorption par pulvérisation primaire et de la section d'absorption par pulvérisation secondaire, 30 % à 85 % du liquide de reflux entrent dans la chambre de mélange d'ammoniac et le liquide de reflux restant entre dans la chambre d'oxydation ; et
- une conduite commandée par soupape est prévue entre une conduite au moyen de laquelle le liquide circulant est prélevé de la partie inférieure de la chambre d'oxydation et une conduite au moyen de laquelle le liquide circulant est prélevé de la partie inférieure de la chambre de mélange d'ammoniac, de façon à permettre un ajustement des quantités et/ou des valeurs de pH des liquides circulants entrant dans la section d'absorption par pulvérisation primaire et la section d'absorption par pulvérisation secondaire respectivement.

4. Procédé selon la revendication 2, dans lequel le liquide de pulvérisation en provenance du fond de la section d'absorption par pulvérisation primaire et le liquide de pulvérisation en provenance du fond de la section d'absorption par pulvérisation secondaire sont combinés, dans lequel environ 30 % à 85 % du liquide de reflux combiné entrent dans la chambre de mélange d'ammoniac pour être combinés avec l'absorbant d'ammoniac, et la partie restante du liquide de reflux combiné entre dans la chambre d'oxydation.

5. Procédé selon la revendication 4, dans lequel au moins une partie de l'absorbant d'ammoniac entre dans la partie de liquide de reflux à amener à la chambre de mélange d'ammoniac par le biais d'un distributeur microporeux ou est amenée directement à la chambre de mélange d'ammoniac et/ou au moins une partie de l'absorbant d'ammoniac est mélangée avec le gaz contenant de l'oxygène et ensuite ajoutée à la chambre de mélange d'ammoniac.

6. Procédé selon l'une quelconque des revendications 1 et 2, dans lequel de l'ammoniac liquide est utilisé en tant qu'absorbant et l'ammoniac liquide est ajouté par le biais d'un mélangeur à une solution/dans la chambre de mélange d'ammoniac et/ou l'ammoniac liquide est d'abord mélangé avec un gaz contenant de l'oxygène et ensuite ajouté à la chambre de mélange d'ammoniac, dans lequel la quantité du gaz contenant de l'oxygène représente 3 % à 10 % du volume d'ammoniac gazeux après la gazéification d'ammoniac liquide.

7. Procédé selon l'une quelconque des revendications 2 à 6, dans lequel l'absorbant d'ammoniac est également ajouté dans au moins l'une parmi la section de refroidissement et de concentration, la section d'absorption par pulvérisation primaire et la section d'absorption par pulvérisation secondaire.

8. Appareil pour mettre en oeuvre un procédé de désulfuration à base d'ammoniac, comprenant :
une section d'absorption par pulvérisation primaire, configurée pour permettre un contact à contre-courant entre un premier liquide de pulvérisation pulvérisé à partir d'une partie supérieure de celle-ci et un courant de gaz entrant à partir d'une partie inférieure de celle-ci, permettre de prélever le premier liquide de pulvérisation mis en contact en provenance de la partie inférieure de celle-ci pour fournir un liquide de reflux, et permettre au courant de gaz absorbé au préalable d'entrer dans une section d'absorption par pulvérisation secondaire ;
la section d'absorption par pulvérisation secondaire, configurée pour permettre un contact à contre-courant entre un second liquide de pulvérisation pulvérisé à partir d'une partie supérieure de celle-ci et le courant de gaz entrant en provenance de la section d'absorption par pulvérisation primaire, et permettre de prélever le second liquide de pulvérisation mis en contact en provenance d'une partie inférieure de celle-ci pour prévoir un liquide de reflux ; et
une section d'oxydation, comprenant :
une chambre d'oxydation, configuré pour permettre un contact et une réaction entre au moins une partie du liquide de reflux en provenance de la section d'absorption par pulvérisation secondaire ou une partie d'un liquide de reflux combiné en provenance des sections d'absorption par pulvérisation primaire et secondaire et un gaz contenant de l'oxygène, et permettre de prélever au moins une partie de la phase liquide d'une partie inférieure de celle-ci pour une circulation vers la section d'absorption par pulvérisation secondaire ou à la fois les sections d'absorption par pulvérisation secondaire et primaire ; et
une chambre de mélange d'ammoniac, configurée pour être en communication fluidique avec la chambre d'oxydation par le biais d'ouvertures sur une partie supérieure et/ou un côté de celle-ci, permettre à au moins une partie du liquide de reflux en provenance de la section d'absorption par pulvérisation primaire ou une partie du liquide de reflux combiné en provenance des sections d'absorption par pulvérisation primaire et secondaire d'entrer à partir d'une partie supérieure de celles-ci et de se mélanger avec un absorbant d'ammoniac ajouté à la chambre de mélange d'ammoniac, et permettre de prélever un courant de liquide d'une partie inférieure de celle-ci pour une circulation vers la section d'absorption par pulvérisation primaire ou à la fois les sections d'absorption par pulvérisation secondaire et primaire.

9. Appareil selon la revendication 8, comprenant en outre une section de refroidissement et de concentration dans la partie amont de la section d'absorption par pulvérisation primaire, la section de refroidissement et de concentration étant configurée pour permettre à un courant de gaz à traiter d'être lavé et refroidi par un liquide de lavage circulant dans la section de refroidissement et de concentration tout en concentrant le liquide de lavage circulant dans la section de refroidissement et de concentration en utilisant la chaleur dans le courant de gaz, et permettre au courant de gaz refroidi d'entrer dans la section d'absorption par pulvérisation primaire en tant que courant de gaz à mettre en contact avec le premier liquide de pulvérisation.

10. Appareil selon la revendication 8 ou 9, qui a une des caractéristiques suivantes :
- la chambre d'oxydation et la chambre de mélange d'ammoniac dans la section d'oxydation sont prévues séparément, ou la chambre d'oxydation est prévue dans une tour d'absorption abritant des sections individuelles de l'appareil, et la chambre de mélange d'ammoniac est prévue dans la tour d'absorption ou à l'extérieur de la tour d'absorption ; ou la chambre d'oxydation et la chambre de mélange d'ammoniac dans la section d'oxydation sont formées par partition d'une cuve ; ou à la fois la chambre d'oxydation et la chambre de mélange d'ammoniac dans la section d'oxydation sont prévues dans la tour d'absorption abritant des sections individuelles de l'appareil, et sont formées par partition de la partie inférieure de la tour d'absorption ;
- le volume de la chambre de mélange d'ammoniac n'est pas inférieur à la quantité du liquide prélevé de la partie inférieure pendant 2 minutes ; et
- une canalisation commandée par soupape est prévue entre une conduite au moyen de laquelle le liquide circulant est prélevé de la partie inférieure de la chambre d'oxydation et une conduite au moyen de laquelle le liquide circulant est prélevé de la partie inférieure de la chambre de mélange d'ammoniac, de façon à permettre un ajustement des quantités et/ou des valeurs de pH des liquides circulants entrant dans la section d'absorption par pulvérisation primaire et la section d'absorption par pulvérisation secondaire respectivement.

11. Appareil selon la revendication 8, dans lequel la chambre d'oxydation et la chambre de mélange d'ammoniac dans la section d'oxydation sont formées par partition d'une cuve, ou les deux sont prévues dans la tour d'absorption abritant des sections individuelles de l'appareil et sont formées par partition de la partie inférieure de la tour d'absorption, dans lequel la section transversale de la chambre de mélange d'ammoniac représente 5 % à 50 % de la section transversale de la cuve/tour d'absorption, et dans lequel il y a des ouvertures sur le côté et/ou la partie supérieure de la chambre de mélange d'ammoniac.

12. Appareil selon la revendication 11, dans lequel la chambre de mélange d'ammoniac est prévue avec sa partie supérieure qui est à au moins 20 cm en dessous d'un niveau contrôlé dans la chambre d'oxydation.

13. Appareil selon la revendication 8, dans lequel des ouvertures sont prévues sur le côté et/ou la partie supérieure de la chambre de mélange d'ammoniac pour obtenir une communication fluidique entre la chambre de mélange d'ammoniac et la chambre d'oxydation, et dans lequel l'appareil a une des caractéristiques suivantes :
- un ou plusieurs trous sont ouverts dans le 1/3 de la partie inférieure sur le côté de la chambre de mélange d'ammoniac ;
- il y a une ou plusieurs ouvertures sur un toit de la chambre de mélange d'ammoniac ;
- l'aire de chaque ouverture de la chambre de mélange d'ammoniac n'est pas supérieure à 0,25 m² ;
- une ou plusieurs ouvertures de la chambre de mélange d'ammoniac sont rondes, rectangulaires, carrées, ovales ou hexagonales ; et
- les ouvertures sur le côté et/ou la partie supérieure de la chambre de mélange d'ammoniac sont prévues éloignées des entrées et sorties des courants individuels.

14. Appareil selon la revendication 8, dans lequel des ouvertures sont prévues au moins sur le côté de la chambre de mélange d'ammoniac pour obtenir une communication fluidique entre la chambre de mélange d'ammoniac et la chambre d'oxydation, et dans lequel le nombre des ouvertures sur le côté permet à l'aire totale des ouvertures d'être égale ou supérieure à la section transversale requise pour atteindre l'écoulement d'une pompe de circulation entre la chambre de mélange d'ammoniac et la section d'absorption par pulvérisation primaire à une vitesse d'écoulement de 4 m/s.

15. Procédé selon la revendication 1, qui a au moins l'une des caractéristiques suivantes :
- l'absorbant d'ammoniac est sous forme d'ammoniac liquide, d'ammoniac gazeux, d'ammoniac aqueux ou d'une combinaison de ceux-ci ;
- l'absorbant d'ammoniac est ajouté à un courant de liquide en utilisant un distributeur tubulaire, un distributeur microporeux ou un mélangeur statique et/ou l'absorbant d'ammoniac est d'abord mélangé avec un gaz contenant de l'oxygène et ensuite le courant de gaz mixte est ajouté directement à la chambre de mélange d'ammoniac ;
- aucun absorbant d'ammoniac n'est ajouté à la chambre d'oxydation, à l'exception de l'absorbant d'ammoniac dans un liquide de reflux entrant dans la chambre d'oxydation et de l'absorbant d'ammoniac entrant dans la chambre d'oxydation à partir de la chambre de mélange d'ammoniac ;
- un taux d'oxydation dans la chambre de mélange d'ammoniac est dans une plage de 93 % à 99,5 % ;
- un taux d'oxydation dans la chambre d'oxydation n'est pas inférieur à 98,5 % ;
- sur la base d'une quantité totale du liquide de reflux en provenance de la section d'absorption par pulvérisation primaire et de la section d'absorption par pulvérisation secondaire, 30 % à 85 % du liquide de reflux entrent dans la chambre de mélange d'ammoniac et le liquide de reflux restant entre dans la chambre d'oxydation ; et
- une conduite commandée par soupape est prévue entre une conduite au moyen de laquelle le liquide circulant est prélevé de la partie inférieure de la chambre d'oxydation et une conduite au moyen de laquelle le liquide circulant est prélevé de la partie inférieure de la chambre de mélange d'ammoniac, de façon à permettre un ajustement des quantités et/ou des valeurs de pH des liquides circulants entrant dans la section d'absorption par pulvérisation primaire et la section d'absorption par pulvérisation secondaire respectivement.
